(19) Europäisches Patentamt / European Patent Office / Office européen des brevets

(11) **EP 4 353 042 B1**

(12) **EUROPEAN PATENT SPECIFICATION**

(45) Date of publication and mention
of the grant of the patent:
**09.07.2025 Bulletin 2025/28**

(21) Application number: **22734139.3**

(22) Date of filing: **30.05.2022**

(51) International Patent Classification (IPC):
**H04W 74/08** *(2024.01)*    *H04W 74/00* *(2009.01)*

(52) Cooperative Patent Classification (CPC):
**H04W 74/08; H04W 74/006**

(86) International application number:
**PCT/EP2022/064587**

(87) International publication number:
**WO 2022/258416 (15.12.2022 Gazette 2022/50)**

(54) **FIRST MESSAGE REPETITION FOR MISSION CRITICAL USER EQUIPEMENTS**

WIEDERHOLUNG EINER ERSTEN NACHRICHT FÜR MISSIONSKRITISCHE BENUTZERGERÄTE

RÉPÉTITION DE PREMIER MESSAGE POUR ÉQUIPEMENTS UTILISATEURS CRITIQUES POUR LA MISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2021 PCT/CN2021/098658**

(43) Date of publication of application:
**17.04.2024 Bulletin 2024/16**

(73) Proprietor: **Telefonaktiebolaget LM Ericsson (publ)**
**164 83 Stockholm (SE)**

(72) Inventors:
• **LI, Jingya**
  **417 58 Göteborg (SE)**
• **LIN, Zhipeng**
  **NANJING, Jiangsu 211100 (CN)**
• **FOLKE, Mats**
  **162 43 Vällingby (SE)**

(74) Representative: **Ericsson**
**Patent Development**
**Torshamnsgatan 21-23**
**164 80 Stockholm (SE)**

(56) References cited:
WO-A1-2019/024130    WO-A1-2021/012137
US-A1- 2021 058 971

**Description**

TECHNICAL FIELD

Disclosed are embodiments related to first message repetition for mission critical user equipments (UEs).

BACKGROUND

1. New Radio (NR) Initial Access

Before a UE can properly communicate within a network, it must carry out cell search to find, synchronize, and identify a cell. Then, it can acquire basic system information and perform random access procedure to establish a connection to the cell.

1.1 NR cell search and system information acquisition

In NR, the combination of synchronization signals (SS) and physical broadcast channel (PBCH) is referred to as a SS/PBCH block (SSB). Similar to Long-Term Evolution (LTE), a pair of SS - primary synchronization signal (PSS) and secondary synchronization signal (SSS) - is periodically transmitted on downlink from each cell to allow a UE to initially access to the network. By detecting SS, a UE can obtain the physical cell identity, achieve downlink synchronization in both time and frequency, and acquire the timing for PBCH. PBCH carries the master information block (MIB) which contains minimum system information that a UE is needed to acquire system information block 1 (SIB 1). SIB1 carries the remaining minimum system information that is needed for a UE to be able to perform subsequent random-access procedure.

1.2 NR 4-step random access procedure

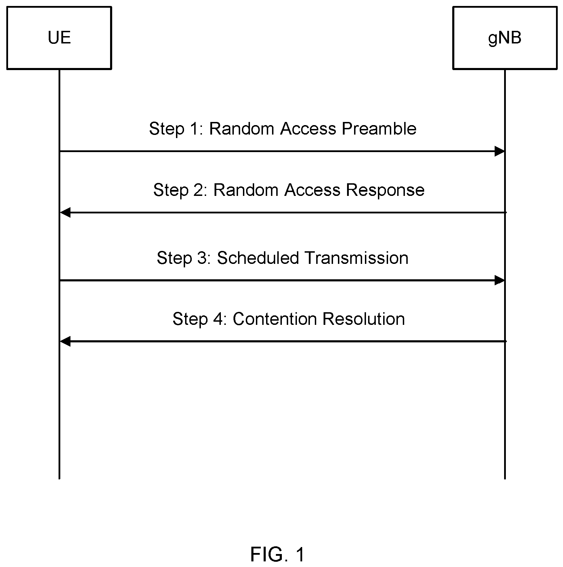

The 4-step random access produce (for initial access), also referred to as Type-1 random access procedure in 3GPP Technical Specification (TS) 38.213, is illustrated in Figure 1. In step 1, a UE initiates the random-access procedure by transmitting in UL a random-access preamble (Msg 1) on a physical random-access channel (PRACH). After detecting the Msg1, in step 2, base station (BS) (e.g., gNB) may respond by transmitting in DL a random-access response (RAR) on a Physical Downlink Shared Channel (PDSCH) (Msg2). In step 3, after successfully decoding Msg2, UE continues the procedure by transmitting in UL a Physical Uplink Shared Channel (PUSCH) (Msg3) for terminal identification and Radio Resource Control (RRC) connection establishment request. In step 4 of the procedure, BS transmits in DL a PDSCH (Msg4) for contention resolution.

There can be cases where multiple UEs select the same random-access preamble and transmit the preamble on the same PRACH time/frequency resource. This preamble collision is called contention. One of the main purposes of applying step 3 and step 4 is to resolve such potential contention.

1.3 NR 2-step random access procedure

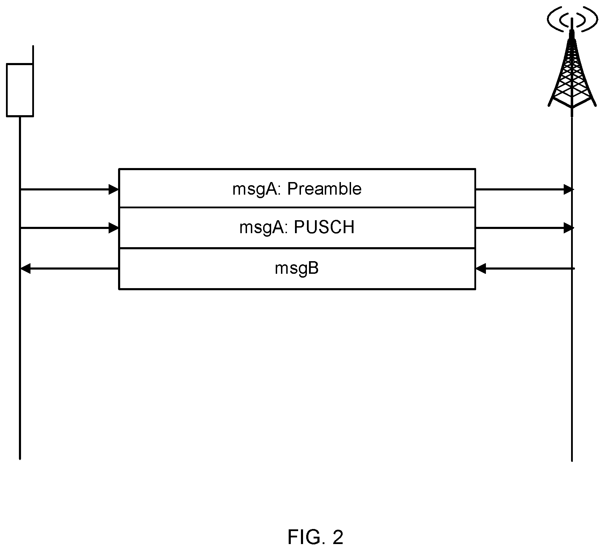

The 2-step random access produce (for initial access), also referred to as Type-2 random access procedure in TS 38.213, is illustrated in Figure 2.

In the first step, UE sends a message A (msgA) including random access preamble together with higher layer data such as RRC connection request possibly with some small payload on PUSCH. After detecting the msgA, the network (e.g., BS) sends Random Access Response (RAR) (called msgB) including UE identifier assignment, timing advance information, and contention resolution message, etc.

2. NR Rel-15 PRACH configuration

In NR, the time and frequency resource on which a random-access preamble (Msg 1) is transmitted is defined as a PRACH occasion.

The time resources and preamble format for the Msg1 transmission is configured by a PRACH configuration index, which indicates a row in a PRACH configuration table specified in TS 38.211 - Tables 6.3.3.2-2, 6.3.3.2-3, 6.3.3.2-4 for FR1 paired spectrum, FR1 unpaired spectrum and FR2 with unpaired spectrum, respectively.

Part of the table 6.3.3.2-3 for FR1 unpaired spectrum for preamble format 0 is provided in Table 1 below. Table 1 shows PRACH configuration for preamble format 0 for FR1 unpaired spectrum. In table 1, the value of x indicates the PRACH configuration period in number of system frames. The value of y indicates the system frame within each PRACH configuration period on which the PRACH occasions are configured. For instance, if y is set to 0, then it means PRACH occasions only configured in the first frame of each PRACH configuration period. The values in the column "subframe number" tells on which subframes are configured with PRACH occasion. The values in the column "starting symbol" is the symbol index.

In case of Time Division Duplex (TDD), semi-statically configured Downlink (DL) parts and/or actually transmitted SSBs can override and invalidate some time-domain PRACH occasions defined in the PRACH configuration table. More specifically, PRACH occasions in the Uplink (UL) part are always valid, and a PRACH occasion within the X part is valid as long as it does not precede or collide with an SSB in the RACH slot and it is at least N symbols after the DL part and the last symbol of an SSB. N is 0 or 2 depending on PRACH format and subcarrier spacing.

Table 1 - PRACH configuration for preamble format 0 for FR1 unpaired spectrum

| PRACH Configuration Index | Preamble format | $n_{\text{SFN}} \bmod x = y$ | | Subframe number | Starting symbol | Number of PRACH slots within a subframe | $N_{\text{t}}^{\text{RA,slot}}$, number of time-domain PRACH occasions within a PRACH slot | $N_{\text{dur}}^{\text{RA}}$, PRACH duration |
|---|---|---|---|---|---|---|---|---|
| | | x | y | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |
| 13 | 0 | 1 | 0 | 3 | 0 | - | - | 0 |
| 14 | 0 | 1 | 0 | 2 | 0 | - | - | 0 |
| 15 | 0 | 1 | 0 | 1,6 | 0 | | | 0 |
| 16 | 0 | 1 | 0 | 1,6 | 7 | - | - | 0 |
| 17 | 0 | 1 | 0 | 4,9 | 0 | - | - | 0 |
| 18 | 0 | 1 | 0 | 3,8 | 0 | - | - | 0 |
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |

(continued)

| PRACH Configuration Index | Preamble format | $n_{\mathrm{SFN}}$ mod $x$ = $y$ | | Subframe number | Starting symbol | Number of PRACH slots within a subframe | $N_t^{\mathrm{RA,slot}}$, number of time-domain PRACH occasions within a PRACH slot | $N_{\mathrm{dur}}^{\mathrm{RA}}$, PRACH duration |
|---|---|---|---|---|---|---|---|---|
| | | $x$ | $y$ | | | | | |
| 27 | 0 | 1 | 0 | 1,3,5,7,9 | 0 | - | - | 0 |

In the frequency domain, NR supports multiple frequency-multiplexed PRACH occasions on the same time-domain PRACH occasion. This is mainly motivated by the support of analog beam sweeping in NR such that the PRACH occasions associated to one SSB are configured at the same time instance but different frequency locations. The starting position in the frequency is indicated by the higher-layer parameter *msgl-FrequencyStart* in SIB1, and the number of consecutive PRACH occasions FDMed in one time instance is configured by the higher-layer parameter *msg1-FDM* in SIB1. The number of PRACH occasions FDMed in one time domain PRACH occasion, can be 1, 2, 4, or 8.

Here the *msg1-FDM* and *msg1-FrequencyStart* are defined in 3GPP TS 38.331 as below: *msg1-FDM:* The number of PRACH transmission occasions FDMed in one time instance. *msg1-FrequencyStart :* Offset of lowest PRACH transmission occasion in frequency domain with respective to Physical Resource Block (PRB) 0. The value is configured so that the corresponding RACH resource is entirely within the bandwidth of the UL Bandwidth Part (BWP).

RACH-ConfigGeneric information element is shown below.

```
-- ASN1START
-- TAG-RACH-CONFIG-GENERIC-START

RACH-ConfigGeneric ::=          SEQUENCE {
    prach-ConfigurationIndex        INTEGER (0..255),
    msg1-FDM                        ENUMERATED {one, two, four, eight},
    msg1-FrequencyStart             INTEGER (0..maxNrofPhysicalResourceBlocks-1),
    zeroCorrelationZoneConfig       INTEGER(0..15),
    preambleReceivedTargetPower     INTEGER (-202..-60),
    preambleTransMax                ENUMERATED {n3, n4, n5, n6, n7, n8, n10, n20, n50,
n100, n200},
    powerRampingStep                ENUMERATED {dB0, dB2, dB4, dB6},
    ra-ResponseWindow               ENUMERATED {sl1, sl2, sl4, sl8, sl10, sl20, sl40, sl80},
    ...
}

-- TAG-RACH-CONFIG-GENERIC-STOP
-- ASN1STOP
```

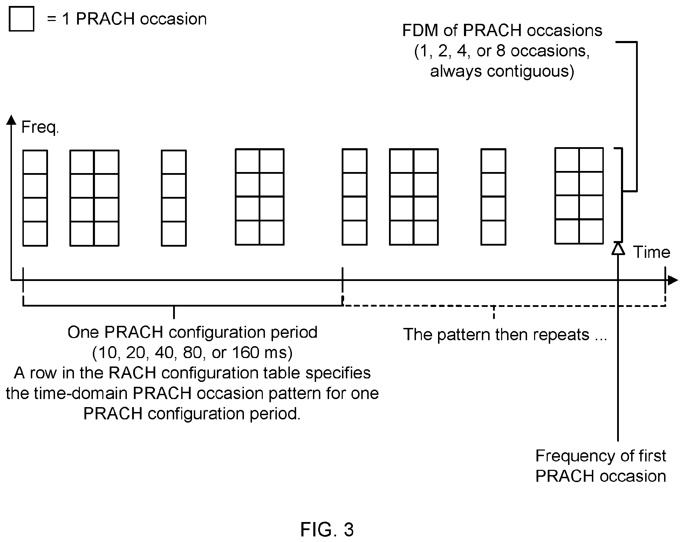

Figure 3 illustrates an example of the PRACH occasion configuration in NR.

In NR Rel-15, there are up to 64 sequences that can be used as random-access preambles per PRACH occasion in each cell. The RRC parameter *totalNumberOfRA-Preambles* determines how many of these 64 sequences are used as random-access preambles per PRACH occasion in each cell. The 64 sequences are configured by including firstly all the available cyclic shifts of a root Zadoff-Chu sequence, and secondly in the order of increasing root index, until 64 preambles have been generated for the PRACH occasion.

2.1 NR Rel-15 association between SSB and PRACH occasion

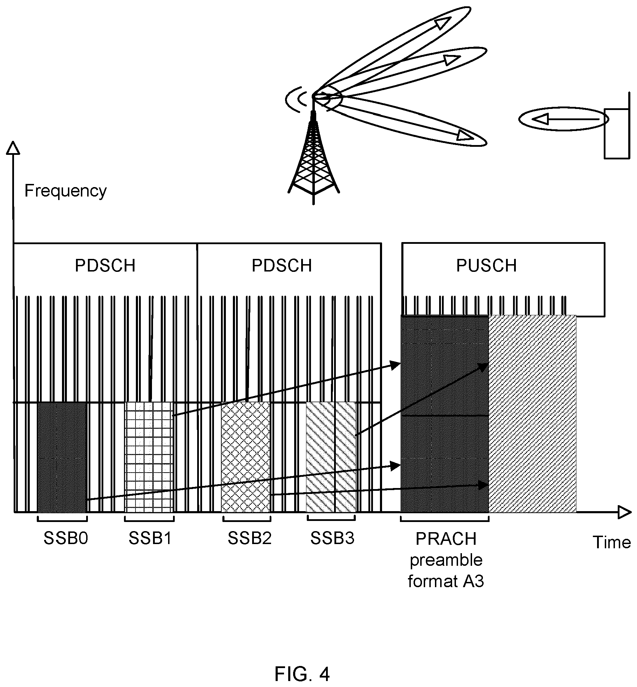

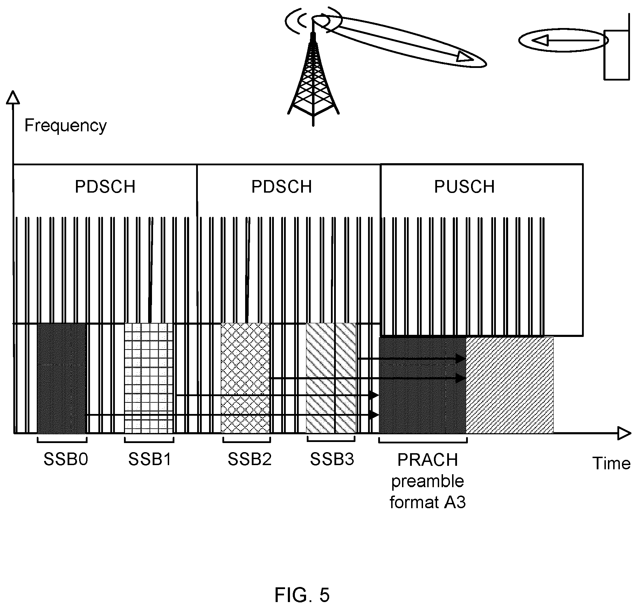

NR Rel-15 supports one-to-one, one-to-many, and many-to-one association between SSB and PRACH Occasions, as illustrated in Figures 4 and 5.

Figure 4 shows an example of one SSB per PRACH occasion.

Figure 5 shows an example with two SSBs per PRACH occasion.

The preambles associated to each SSB is configured by the two RRC parameters in the *RACH-ConfigCommon: ssb-perRACH-OccasionAndCB-PreamblesPerSSB* and *totalNumberOfRA-Preambles.*

The detailed mapping rule is specified in TS 38.213 section 8.1, as following:

For Type-1 random access procedure, a UE is provided a number N of SS/PBCH blocks associated with one PRACH occasion and a number *R* of contention based preambles per SS/PBCH block per valid PRACH occasion by *ssb-perRACH-OccasionAndCB-PreamblesPerSSB.*

A UE is provided a number N of SS/PBCH blocks associated with one PRACH occasion and a number *R* of contention-based preambles per SS/PBCH block per valid PRACH occasion by *ssb-perRACH-OccasionAndCB-PreamblesPerSSB.* If *N* < 1, one SS/PBCH block is mapped to 1/*N* consecutive valid PRACH occasions and *R* contention based preambles with consecutive indexes associated with the SS/PBCH block per valid PRACH occasion start from preamble index 0. If *N* ≥ 1, *R* contention based preambles with consecutive indexes associated with SS/PBCH block *n*, $0 \leq n \leq N$ -1, per valid PRACH occasion start from preamble index $n \cdot N_{\text{preamble}}^{\text{total}} / N$ where $N_{\text{preamble}}^{\text{total}}$ is provided by *totalNumberOfRA-Preambles* and is an integer multiple of *N* .

SS/PBCH block indexes provided by *ssb-PositionsInBurst* in *SIB1* or in *ServingCellConfigCommon* are mapped to valid PRACH occasions in the following order where the parameters are described in [4, TS 38.211].

- First, in increasing order of preamble indexes within a single PRACH occasion

- Second, in increasing order of frequency resource indexes for frequency multiplexed PRACH occasions

- Third, in increasing order of time resource indexes for time multiplexed PRACH occasions within a PRACH slot

- Fourth, in increasing order of indexes for PRACH slots

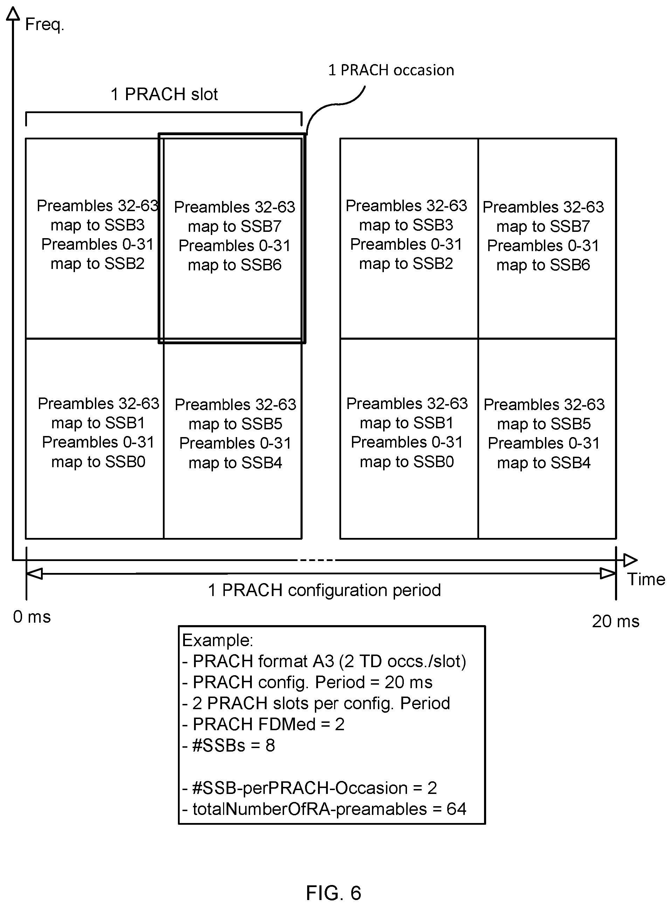

Figure 6 shows an example of the mapping between SSBs and preambles in different PRACH occasions.

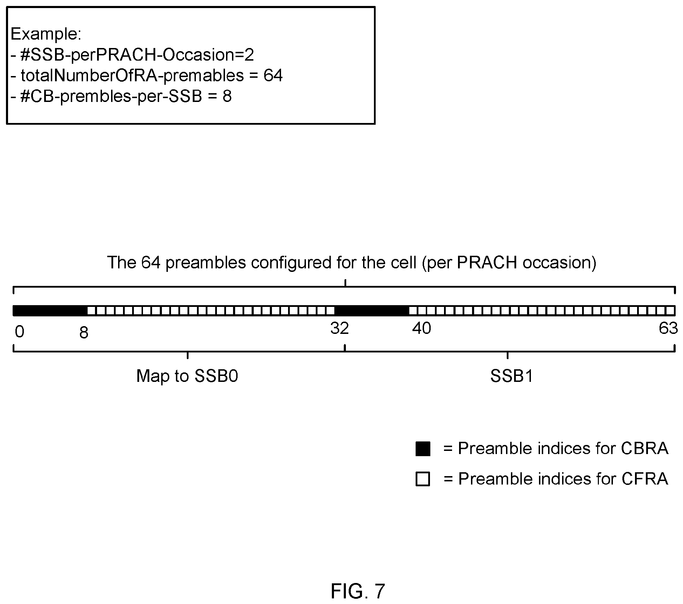

For each SSB, the associated preambles per PRACH occasion, $N_{\text{preamble}}^{\text{total}} / N$, are further divided into two sets for CBRA and CFRA. The number of CB preambles per SSB per PRACH occasion, *R* , is signaled by the RRC parameter *ssb-perRACH-OccasionAndCB-PreamblesPerSSB.* Preamble indices for CBRA and CFRA are mapped consecutively for one SSB in one PRACH occasion, as shown in Figure 7.

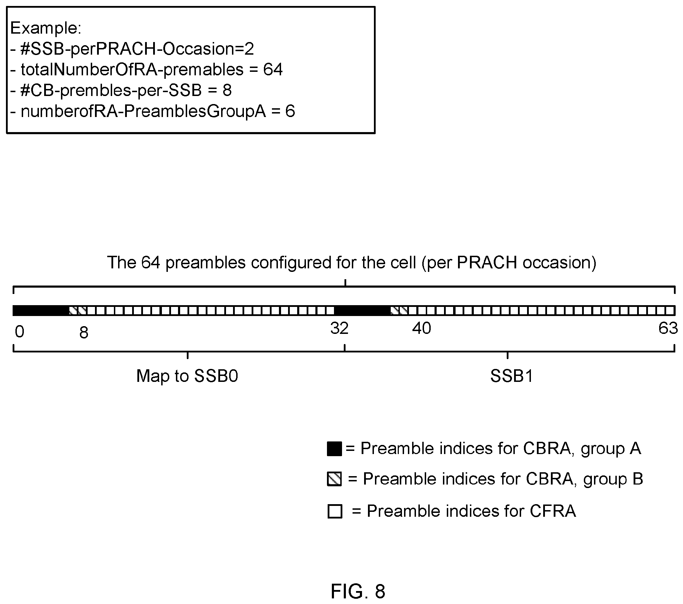

If Random Access Preambles group B is configured for CBRA, then, amongst the CBRA preambles (#*CB-preambles-per-SSB*) associated with an SSB, the first *numberOfRA-PreamblesGroupA* Random Access Preambles belong to Random Access Preambles group A, and the remaining Random Access Preambles associated with the SSB belong to Random Access Preambles group B. Figure 8 shows an example, when Random Access Preambles group B is configured for CBRA.

According to TS 38.213, one of the two conditions must be met in order for a UE to select Random Access Preambles group B for PRACH transmission:

Condition 1: potential Msg3 size (UL data available for transmission plus MAC header and, where required, MAC CEs) is greater than *ra-Msg3SizeGroupA* and the pathloss is less than *PCMAX* (of the Serving Cell performing the Random Access Procedure) - *preambleReceivedTargetPower - msg3-DeltaPreamble - messagePowerOffsetGroupB*; or

Condition 2: the Random Access procedure was initiated for the CCCH logical channel and the CCCH SDU size plus MAC subheader is greater than *ra-Msg3SizeGroupA.*

Figure 8 illustrates associated preambles for CBRA and CFRA per SSB per PRACH occasion when Random Access Preambles group B is configured.

3. RRC Establishment Cause for UE differentiation

In step 3 of the 4-step random access procedure, a UE includes the *rrcSetupRequest* message in Msg3. The *rrcSetupRequest* message contains the parameter, *establishmentCause.* which indicates the establishment cause that triggers the connection establishment, e.g., emergency call, mission critical services, multimedia priority services, etc.

A gNB identifies the type of connection request from the UE by decoding the establishment cause received in msg3, based on which, the gNB decides whether this request shall be admitted or rejected, based on the network traffic load situation and available resource in the network.

### 4. NR Rel-16 for MsgA configuration

### 4.1 *MsgA preamble configuration*

The RACH occasions for 2-step RACH can be either separately configured (also known as Type-2 random access procedure with separate configuration of PRACH occasions with Type-1 random access procedure) or are shared with 4-step RACH (also known as Type-2 random access procedure with common configuration of PRACH occasions with Type-1 random access procedure) in which case different set of preamble IDs will be used.

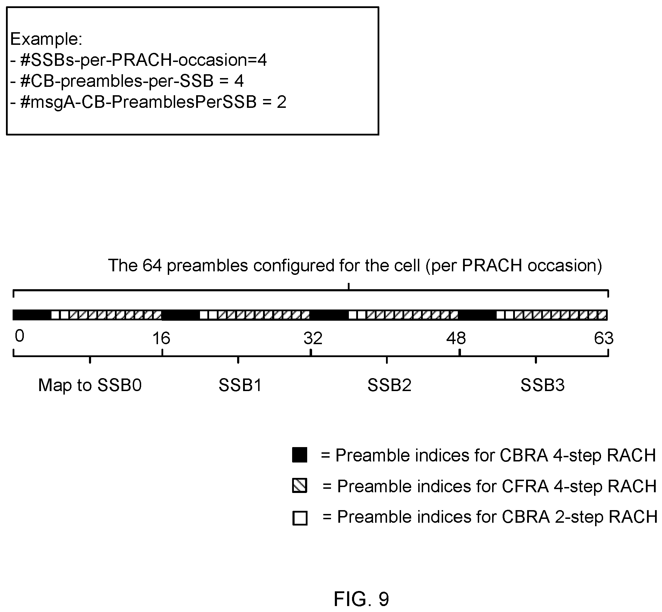

For Type-2 random access procedure with common configuration of PRACH occasions with Type-1 random access procedure, a UE is provided a number $N$ of SS/PBCH blocks associated with one PRACH occasion by *ssb-perRACH-OccasionAndCB-PreamblesPerSSB* and a number $Q$ of contention based preambles per SS/PBCH block per valid PRACH occasion by *msgA-CB-PreamblesPerSSB.* The PRACH transmission can be on a subset of PRACH occasions associated with a same SS/PBCH block index for a UE provided with a PRACH mask index by *msgA-ssb-sharedRO-MaskIndex.* An example of the SSB to RO mapping and the preamble allocation is provided in Figure 9. Note that only one preamble group is assumed in this example.

Figure 9 illustrates associated preambles for CBRA and CFRA per SSB per PRACH occasion when ROs for 2-step RACH and 4-step RACH are shared.

For Type-2 random access procedure with separate configuration of PRACH occasions with Type-1 random access procedure, a UE is provided a number $N$ of SS/PBCH blocks associated with one PRACH occasion and a number R of contention based preambles per SS/PBCH block per valid PRACH occasion by *ssb-perRACH-OccasionAndCB-PreamblesPerSSB-msgA* when provided; otherwise, by *ssb-perRACH-OccasionAndCB-PreamblesPerSSB.* Since the SSB to RO mapping and the preamble allocation are independently configured, the example provided for 4-step RACH in Figure 8 is also valid for this case of 2-step RACH except that the parameters are separately configured for 2-step RACH.

Document US 2021/058971 A1 relates to relates to wireless communication systems. More particularly, the present disclosure relates to repetition of physical random access channel (PRACH) preamble transmission for user equipments (UEs) and enhancing transmission of a PRACH preamble for UEs.

Document WO 2019/024130 A1 relates generally to wireless communication and more specifically to configurations for transmitting random access preamble messages.

### SUMMARY

Mission critical (MC) services require coverage that is beyond what is typically needed for commercial services. In addition, in high load situations, the network should prioritize the access requests from UEs configured to provide MC services over the access requests from normal UEs.

Since message 1 shown in Figure 1 or message A shown in Figure 2 is the first message transmitted from a UE during the initial procedure, it is important to ensure the robustness of message 1 or message A transmissions from MC UEs.

In NR Rel-16, the prioritized random access feature was introduced for MC UEs. In particular, if a MC UE detects a Msg2 but fails to find the corresponding random access response matched to its random-access preamble transmission, then, the MC UE can send a new access attempt with a shorter waiting time (i.e., back-off time) and a larger preamble power ramping step size, compared to normal UEs. This feature can increase the likelihood of a faster successful completion of random access for MC UEs, but it can only be used after at least one access attempt failure.

Currently, there is no solution for proactively enhancing the robustness and/or coverage of message 1 (in Figure 1) or message A (shown in Figure 2) transmitted from MC UEs.

Some embodiments of this disclosure provide methods of how to enable, configure, and/or design first message (PRACH) repetition in random access for UEs configured to provide mission critical (MC) services (herein after, MC UEs). A MC UE is capable of performing initial first message transmission based on the signalling information received from the network node.

Accordingly, in one aspect, there is provided a method of configuring user equipments (UEs) to repeatedly transmit a first message while a repetition condition is met according to claim 1.

In another aspect, there is provided a method of configuring a user equipment (UE) to repeatedly transmit a first message while a repetition condition is met according to claim 10.

In another aspect, there is provided a computer program comprising instructions which when executed by processing circuitry cause the processing circuitry to perform the method described above.

In another aspect, there is provided a base station for configuring user equipments (UEs) to repeatedly transmit a first message while a repetition condition is met according to claim 17.

In another aspect, there is provided a user equipment (UE) for repeatedly transmitting a first message while a repetition condition is met according to claim 19.

As described above, embodiments of this disclosure provide methods of enabling and/or configuring first message repetition for MC UEs. The first message repetition can improve network coverage and robustness of PRACH transmissions, thereby improving rate successfully and reducing latency for connection setup for MC UEs.

In addition, in case the same PRACH resources are shared between MC UEs and normal UEs and both types of UEs can perform PRACH repetition, methods of some embodiments of this disclosure can be used to allow PRACH repetition only for MC UEs in order to prioritize the random access for MC UEs.

BRIEF DESCRIPTION OF THE DRAWINGS

The accompanying drawings, which are incorporated herein and form part of the specification, illustrate various embodiments.

Figure 1 shows a four-step random access procedure for initial access.
Figure 2 shows a two-step random access procedure for initial access.
Figure 3 illustrates PRACH configuration in NR.
Figure 4 shows one SSB per PRACH occasion.
Figure 5 shows 2 SSBs per PRACH occasion.
Figure 6 shows mappings between SSB and random-access preambles.
Figures 7-9 illustrate preambles for CBRA and CFRA.

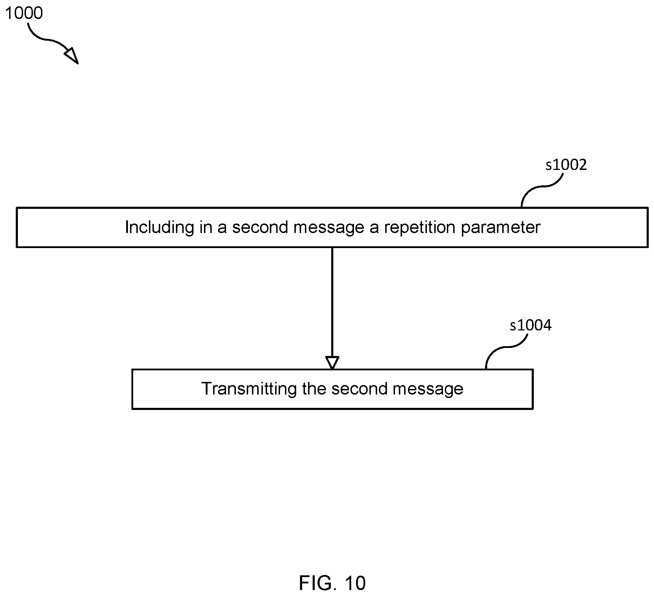

Figure 10 shows a process according to some embodiments.

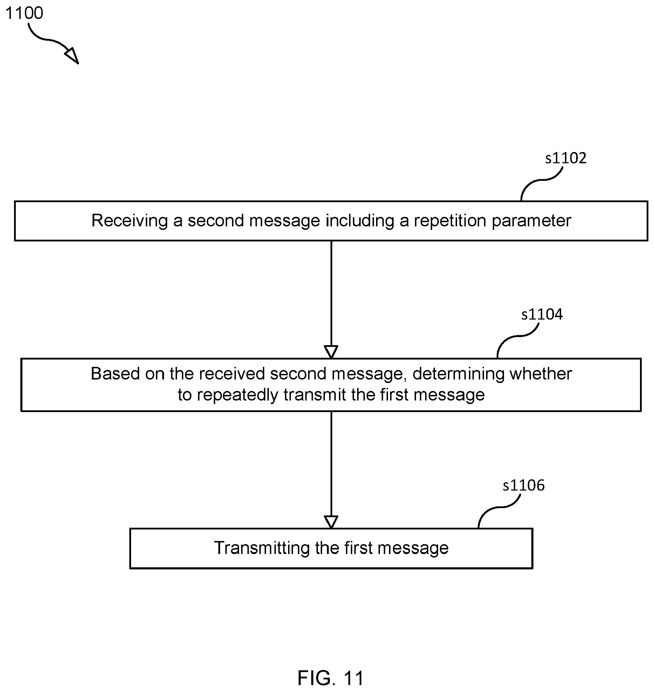

Figure 11 shows a process according to some embodiments.

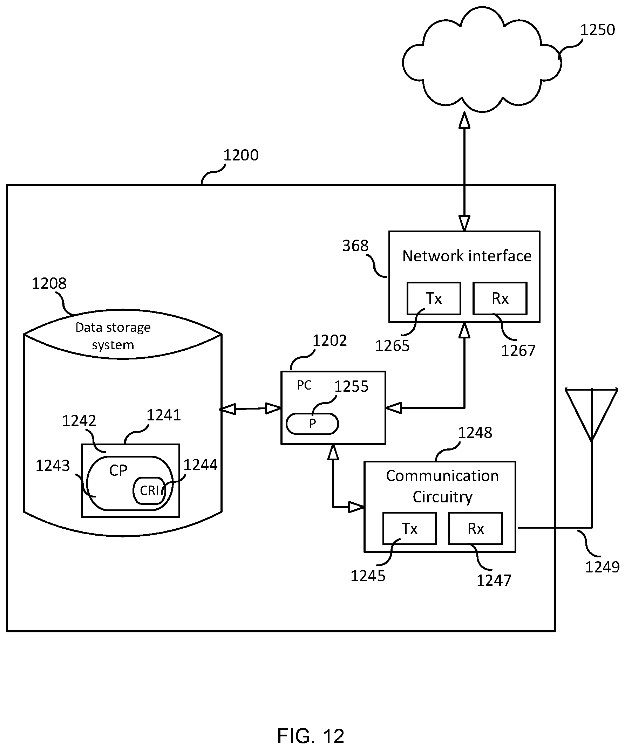

Figure 12 shows a base station according to some embodiments.

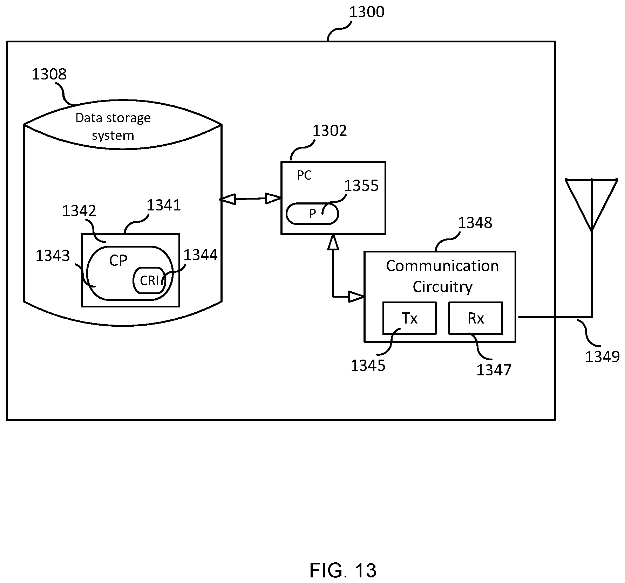

Figure 13 shows a UE according to some embodiments.

DETAILED DESCRIPTION

Some embodiments of this disclosure provide methods for configuring, prioritizing, and/or supporting the first message repetition (i.e., a repeated transmission of the first message) for particular type(s) of UEs such as MC UEs, UEs configured with multimedia priority service(s), etc.

In this disclosure, the transmission of the "first message" may be a Msg1 transmission in 4-step RACH or a MsgA or MsgA PRACH transmission in 2-step RACH. Also the "first message repetition" may mean multiple PRACH transmissions before the end of RAR window and/or multiple PRACH transmissions from one UE before PRACH reattempt happens.

In some embodiments, the first message repetition may be multiple PRACH transmissions with the same PRACH preambles. But in other embodiments, the first message repetition may be multiple PRACH transmission with different PRACH preambles. The PRACH may be transmitted with the same transmit (TX) beam or different TX beams.

In this disclosure, the "PRACH resources" may be PRACH resources in time or frequency domain or different PRACH preamble sequences.

Embodiments of this disclosure provide methods of enabling the first message repetition for particular type(s) of UEs (e.g., MC UEs, UEs configured with multimedia priority services, etc.). For simplicity, in the rest of this disclosure, MC UEs will be used as an example of the particular type of UEs.

In some embodiments, the first message repetition may be configured with one or more of the following options: (1) the first message repetition may be configured in System Information (SI) (e.g., in the *RACH-ConfigCommon* IE *in SIB1*); (2) the first message repetition may be associated with a particular UE access identity; (3) the first message repetition may be associated with a particular access category; (4) PRACH repetition determination may be based on UE's capability of supporting the first message repetition; and (5) PRACH repetition determination may be based on the measurement from a reference signal (e.g., RSRP, RSRQ, RSSI, or SINR).

For example, in a four-step contention-based random access (CBRA), a first message repetition parameter may be included in *ra-PrioritizationForAccessIdentity* in the *RACH-ConfigCommon* IE in *SIB1.* The parameter may be associated with a specific set of access identities (e.g., access identity 1 - UEs configured with multimedia priority services - and/or access identity 2 - UEs configured with MC services). If the first message repetition parameter is present in SIB1, a UE configured with the specific set of access identities must perform MsgA (PRACH) repetition when transmitting MsgA in the 2-step CBRA. The first message repetition parameter may additionally indicate the number of the repetition.

As another example, in a two-step contention-based random access (CBRA), a first message repetition parameter may be included in *ra-PrioritizationForAccessIdentityTwoStep* in the *RACH-ConfigCommon* IE in SIB1. The parameter may be associated with a specific set of access identities (e.g., access identity 1 - UEs configured with multimedia priority services - and/or access identity 2 - UEs configured with MC services). If the first message repetition parameter is present in SIB1, a UE configured with the specific set of access identities must perform MsgA (PRACH) repetition when transmitting MsgA in the 2-step CBRA. The first message repetition parameter may additionally indicate the number of the repetition.

In another example, when the PRACH repetition configuration is enabled in SIB1, a MC UE may decide whether to use PRACH repetition based on the MC UE's capability of supporting the PRACH repetition and/or whether the RSRP, RSRQ, and/or RSSI measured on a downlink reference signal (e.g., the RS for pathloss estimation) is below or not larger than a configured or predetermined threshold.

In some embodiments, the first message repetition may be associated with a specific set of PRACH resources that are dedicated for MC UEs. Here, a PRACH resource may be a time-frequency PRACH occasion or a random-access preamble index. For example, if dedicated PRACH resources are configured for MC UEs, then the MC UEs may always perform Msg1 repetition when using these resources if certain criteria are met. The number of the repetitions may be indicated by the number of consecutive PRACH occasions configured in the time domain.

In some embodiments, the first message repetition for MC UEs may be associated with a subset of a specific set of PRACH resources that are dedicated for UEs requesting PRACH repetition. For example, a separate set of PRACH resources may be configured for UEs supporting PRACH repetition. In such case, a subset of this separate set of PRACH resources may be reserved for MC UEs supporting PRACH repetition and the remaining PRACH resources may be used by normal UEs supporting PRACH repetition.

In some embodiments, MC UEs may be configured to always support the first message repetition. But there may be a scenario where some MC UEs may not have capabilities to support the first message repetition. Thus, in some embodiments, MC UEs may be configured to support the first message repetition based on MC UEs' capabilities. Alternatively or additionally, in some embodiments, even if a MC UE supports the first message repetition, the MC UE may be configured to select first message transmission without repetition.

Figure 10 shows a process 1000 according to some embodiments. Process 1000 is for configuring UEs to repeatedly transmit a first message while a repetition condition is met. Process 1000 may be performed by a base station such as gNB and may begin with step s1002. Step s1002 comprises including in a second message a repetition parameter. The repetition parameter indicates that a UE receiving the second message including the repetition parameter is allowed to or must transmit the first message repeatedly while the repetition condition is met if one or more criteria are met. Step s1004 comprises transmitting the second message.

In some embodiments, the first message includes random access preamble.

In some embodiments, the repetition condition is that (i) a random access response (RAR) window has not been ended and/or (ii) physical random access channel (PRACH) reattempt has not occurred.

In some embodiments, the second message is a broadcast message, and the repetition parameter is included in system information block (SIB) of the broadcast message.

In some embodiments, said one or more criteria includes that the UE receiving the second message is (i) a UE configured with a mission critical (MC) service, (ii) a UE configured with multimedia priority services, or (iii) any one of (i) and (ii).

In some embodiments, said one or more criteria is associated with one or more UE capabilities.

In some embodiments, said one or more UE capabilities includes i) a capability of repeatedly transmitting Msg1, Msg3, and/or MsgA, and/or ii) beamforming related capability.

Examples of the beamforming related capability include the capability of transmitting Msg1, Msg3, and/or MsgA using a wide beam and/or a narrow beam, the capability of performing an analog beamforming and/or a digital beamforming, the capability of performing a beam sweeping for Msg1, Msg3, and/or MsgA transmissions, the capability of using a higher transmit power for Msg1, Msg3, and/or MsgA transmissions, the number of narrow beams per a UE panel, etc.

In some embodiments, said one or more UE capabilities may be defined per frequency range (e.g., FR1, FR2), frequency band, cell, or bandwidth part. In some embodiments, the related UE capabilities may be associated with a specific feature such as, for example, random access procedure during initial access, random access procedure for beam failure recovery, random access procedure for link failure recovery, or/and random access procedure for handover.

In some embodiments, said one or more criteria is associated with one or more UE capabilities.

In some embodiments, said one or more UE capabilities includes i) a capability of repeatedly transmitting Msg1, Msg3, and/or MsgA, and/or ii) beamforming related capability. Msg1, Msg3, and MsgA are defined in 3GPP TS 38.213, Section 8.

In some embodiments, said one or more criteria includes that a measurement of a downlink reference signal is below or not larger than a predetermined threshold.

In some embodiments, the repetition parameter further indicates the number of allowed or required repeated transmissions of the first message.

In some embodiments, a particular group of PRACH resources are assigned for repeated transmission of the first message for the UEs.

Figure 11 shows a process 1100 according to some embodiments. Process 1100 is for configuring a user equipment (UE) to repeatedly transmit a first message while a repetition condition is met. Process 1100 may begin with step s1102. Step s1102 comprises receiving a second message including a repetition parameter. The repetition parameter indicates that a UE receiving the second message including the repetition parameter is allowed to or must transmit the first message repeatedly while the repetition condition is met if one or more criteria are met. Step s1104 comprises based on the received second message, determining whether to repeatedly transmit the first message. Step s1106 comprises transmitting the first message.

In some embodiments, the first message includes random access preamble.

In some embodiments, the repetition condition is that (i) a random access response (RAR) window has not been ended and/or (ii) physical random access channel (PRACH) reattempt has not occurred.

In some embodiments, the second message is a broadcast message, and the repetition parameter is included in system information block (SIB) of the broadcast message.

In some embodiments, said one or more criteria includes that the UE receiving the second message is (i) a UE configured to provide a mission critical (MC) service, (ii) a UE configured to provide multimedia priority services, or (iii) any one of (i) and (ii).

In some embodiments, said one or more criteria is associated with one or more UE capabilities.

In some embodiments, said one or more UE capabilities includes i) a capability of repeatedly transmitting Msg1, Msg3, and/or MsgA, and/or ii) beamforming related capability.

Examples of the beamforming related capability include the capability of transmitting Msg1, Msg3, and/or MsgA using a wide beam and/or a narrow beam, the capability of performing an analog beamforming and/or a digital beamforming, the capability of performing a beam sweeping for Msg1, Msg3, and/or MsgA transmissions, the capability of using a higher transmit power for Msg1, Msg3, and/or MsgA transmissions, the number of narrow beams per a UE panel, etc.

In some embodiments, said one or more UE capabilities may be defined per frequency range (e.g., FR1, FR2), frequency band, cell, or bandwidth part. In some embodiments, the related UE capabilities may be associated with a specific feature such as, for example, random access procedure during initial access, random access procedure for beam failure recovery, random access procedure for link failure recovery, or/and random access procedure for handover.

In some embodiments, the method further comprises receiving a downlink reference signal, and said one or more criteria includes that a measurement of the downlink reference signal is below or not larger than a predetermined threshold.

In some embodiments, the repetition parameter further indicates the number of allowed or required repeated transmissions of the first message.

In some embodiments, a particular group of PRACH resources are assigned for repeated transmission of the first message.

Referring now to Figure 12, Figure 12 is a block diagram of a network node (e.g., a base station such as gNB), according to some embodiments. As shown in Figure 12, apparatus 1200 may comprise: processing circuitry (PC) 1202, which may include one or more processors (P) 1255 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (*i.e.,* apparatus 1200 may be a distributed computing apparatus); a network interface 1268 comprising a transmitter (Tx) 1265 and a receiver (Rx) 1267 for enabling apparatus 1200 to transmit data to and receive data from other nodes connected to a network 1250 (e.g., an Internet Protocol (IP) network) to which network interface 1268 is connected; communication circuitry 1248, which is coupled to an antenna arrangement 1249 comprising one or more antennas and which comprises a transmitter (Tx) 1245 and a receiver (Rx) 1247 for enabling apparatus 1200 to transmit data and receive data (e.g., wirelessly transmit/receive data); and a local storage unit (a.k.a., "data storage system") 1208, which may include one or more non-volatile storage devices and/or one or more volatile storage devices. In embodiments where PC 1202 includes a programmable processor, a computer program product (CPP) 1241 may be provided. CPP 1241 includes a computer readable medium (CRM) 1242 storing a computer program (CP) 1243 comprising computer readable instructions (CRI) 1244. CRM 1242 may be a non-transitory computer readable medium, such as, magnetic media (e.g., a hard disk), optical media, memory devices (e.g., random access memory, flash memory), and the like. In some embodiments, the CRI 1244 of computer program 1243 is configured such that when executed by PC 1202, the CRI causes apparatus 1200 to perform steps described herein (e.g., steps described herein with reference to the flow charts). In other embodiments, apparatus 1200 may be configured to perform steps described herein without the need for code. That is, for example, PC 1202 may consist merely of one or more ASICs. Hence, the features of the embodiments described herein may be implemented in hardware and/or software.

Referring now to Figure 13, Figure 13 is a block diagram of a UE, according to some embodiments. As shown in Figure 13, a UE may comprise: processing circuitry (PC) 1302, which may include one or more processors (P) 1355 (e.g., one or more general purpose microprocessors and/or one or more other processors, such as an application specific integrated circuit (ASIC), field-programmable gate arrays (FPGAs), and the like); communication circuitry 1348, which is coupled to an antenna arrangement 1349 comprising one or more antennas and which comprises a transmitter (Tx) 1345 and a receiver (Rx) 1347 for enabling the UE to transmit data and receive data (e.g., wirelessly transmit/receive data); and a local storage unit (a.k.a., "data storage system") 1308, which may include one or more non-volatile storage devices and/or one or more volatile storage devices. In embodiments where PC 3202 includes a programmable processor, a computer program product (CPP) 1341 may be provided. CPP 1341 includes a computer readable medium (CRM) 1342 storing a computer program (CP) 1343 comprising computer readable instructions (CRI) 1344. CRM 1342 may be a non-transitory computer readable medium, such as, magnetic media (e.g., a hard disk), optical media, memory devices (e.g., random access memory, flash memory), and the like. In some embodiments, the CRI 1344 of computer program 1343 is configured such that when executed by PC 1302, the CRI causes the UE to perform steps described herein (e.g., steps described herein with reference to the flow charts). In other embodiments, the UE may be configured to perform steps described herein without the need for code. That is, for example, PC 1302 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above described exemplary embodiments. Moreover, any combination of the above-described elements in all possible variations thereof is encompassed by the disclosure, as long as this does not depart from the scope of the appended set of claims.

Additionally, while the processes and message flows described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel, as long as this does not depart from the scope of the appended set of claims.

## Claims

1. A method (1000) of configuring one or more user equipments, UEs, to repeatedly transmit a first message while a repetition condition is met, wherein the method is performed by a base station and comprises:

   including (s1002) in a second message a repetition parameter, wherein the repetition parameter indicates that a UE receiving the second message including the repetition parameter is allowed to or must transmit the first message repeatedly while the repetition condition is met if one or more criteria are met; and
   transmitting (s1004) the second message, **characterized in that**
   the repetition condition is that physical random access channel, PRACH, reattempt has not occurred, and said one or more criteria includes that the UE receiving the second message is (i) a UE configured to provide a mission critical, MC, service, (ii) a UE configured to provide one or more multimedia priority services, or (iii) any one of (i) and (ii).

2. The method of claim 1, wherein the first message includes random access preamble.

3. The method of any one of claims 1-2, wherein the repetition condition is also that a random access response, RAR, window has not been ended.

4. The method of any one of claims 1-3, wherein

   the second message is a broadcast message, and
   the repetition parameter is included in system information block, SIB, of the broadcast message.

5. The method of any one of claims 1-4, wherein said one or more criteria is associated with one or more UE capabilities.

6. The method of claim 5, wherein said one or more UE capabilities includes i) a capability of repeatedly transmitting Msg1, Msg3, and/or MsgA, and/or ii) beamforming related capability.

7. The method of any one of claims 1-6, wherein said one or more criteria includes that a measurement of a downlink reference signal is below or not larger than a predetermined threshold.

8. The method of any one of claims 1-7, wherein the repetition parameter further indicates the number of allowed or required repeated transmissions of the first message.

9. The method of any one of claims 1-8, wherein
a particular group of PRACH resources is dedicated for repeated transmission of the first message for the UEs.

10. A method (1100) of configuring a user equipment, UE, to repeatedly transmit a first message while a repetition condition is met, wherein the method is performed by a UE and comprises:

receiving (s1102) a second message including a repetition parameter, wherein the repetition parameter indicates that a UE receiving the second message including the repetition parameter is allowed to or must transmit the first message repeatedly while the repetition condition is met if one or more criteria are met;
based on the received second message, determining (s1104) whether to repeatedly transmit the first message; and
transmitting (s1106) the first message, **characterized in that**
the repetition condition is that physical random access channel, PRACH, reattempt has not occurred, and
said one or more criteria includes that the UE receiving the second message is (i) a UE configured to provide a mission critical, MC, service, (ii) a UE configured to provide one or more multimedia priority services, or (iii) any one of (i) and (ii).

11. The method of claim 10, wherein the first message includes random access preamble and wherein the repetition condition is also that a random access response, RAR, window has not been ended.

12. The method of any one of claims 10-11, wherein

the second message is a broadcast message, and
the repetition parameter is included in system information block, SIB, of the broadcast message.

13. The method of any one of claims 10-12, wherein said one or more criteria is associated with one or more UE capabilities and wherein said one or more UE capabilities includes i) a capability of repeatedly transmitting Msg1, Msg3, and/or MsgA, and/or ii) beamforming related capability.

14. The method of any one of claims 10-13, wherein

the method further comprises receiving a downlink reference signal, and
said one or more criteria includes that a measurement of the downlink reference signal is below or not larger than a predetermined threshold.

15. The method of any one of claims 10-14, wherein the repetition parameter further indicates the number of allowed or required repeated transmissions of the first message.

16. The method of any one of claims 10-15, wherein a particular group of PRACH resources is dedicated for repeated transmission of the first message.

17. A base station (1200) for configuring one or more user equipments, UEs, to repeatedly transmit a first message while a repetition condition is met, comprising means being configured to:

include (s1002) in a second message a repetition parameter, wherein the repetition parameter indicates that a UE receiving the second message including the repetition parameter is allowed to or must transmit the first message repeatedly while the repetition condition is met if one or more criteria are met; and
transmit (s1004) the second message, **characterized in that**
the repetition condition is that physical random access channel, PRACH, reattempt has not occurred, and
said one or more criteria includes that the UE receiving the second message is (i) a UE configured to provide a mission critical, MC, service, (ii) a UE configured to provide one or more multimedia priority services, or (iii) any one of (i) and (ii).

18. The base station of claim 17, wherein the base station further comprises means being configured to perform the method of any one of claims 2-9.

19. A user equipment, UE, (1300) for repeatedly transmitting a first message while a repetition condition is met, comprising means being configured to:

receive (s1102) a second message including a repetition parameter, wherein the repetition parameter indicates that a UE receiving the second message including the repetition parameter is allowed to or must transmit the first message repeatedly while the repetition condition is met if one or more criteria are met;
based on the received second message, determine (s1104) whether to repeatedly transmit the first message; and transmit (s1106) the first message, **characterized in that**
the repetition condition is that physical random access channel, PRACH, reattempt has not occurred, and said one or more criteria includes that the UE receiving the second message is (i) a UE configured to provide a mission critical, MC, service, (ii) a UE configured to provide one or more multimedia priority services, or (iii) any one of (i) and (ii).

20. The UE of claim 19, wherein the UE further comprises means being configured to perform the method of any one of claims 11-16.

**Patentansprüche**

1. Verfahren (1000) zum Konfigurieren einer oder mehrerer Benutzerausrüstungen, UEs, um wiederholt eine erste Nachricht zu übermitteln, während eine Wiederholungsbedingung erfüllt ist, wobei das Verfahren von einer Basisstation durchgeführt wird und Folgendes umfasst:

Einschließen (s1002) eines Wiederholungsparameters in eine zweite Nachricht, wobei der Wiederholungsparameter angibt, dass eine UE, die die zweite Nachricht empfängt, die den Wiederholungsparameter beinhaltet, die erste Nachricht wiederholt übermitteln darf oder muss, während die Wiederholungsbedingung erfüllt ist, wenn ein oder mehrere Kriterien erfüllt sind; und
Übermitteln (s1004) der zweiten Nachricht, **dadurch gekennzeichnet, dass**
die Wiederholungsbedingung darin besteht, dass ein erneuter Versuch des Physical Random Access Channel, PRACH, nicht erfolgt ist, und
das eine oder die mehreren Kriterien beinhalten, dass die UE, die die zweite Nachricht empfängt, (i) eine UE ist, die dazu konfiguriert ist, einen missionskritischen, MC, Dienst bereitzustellen, (ii) eine UE ist, die dazu konfiguriert ist, einen oder mehrere Multimedia-Prioritätsdienste bereitzustellen, oder (iii) ein beliebiges von (i) und (ii) zutrifft.

2. Verfahren nach Anspruch 1, wobei die erste Nachricht eine Direktzugriffspräambel beinhaltet.

3. Verfahren nach einem der Ansprüche 1-2, wobei die Wiederholungsbedingung auch darin besteht, dass ein Fenster einer Direktzugriffsantwort, RAR, nicht beendet wurde.

4. Verfahren nach einem der Ansprüche 1-3, wobei

die zweite Nachricht eine Sendenachricht ist und
der Wiederholungsparameter in dem Systeminformationsblock, SIB, der Sendenachricht beinhaltet ist.

5. Verfahren nach einem der Ansprüche 1-4, wobei das eine oder die mehreren Kriterien einer oder mehreren UE-Fähigkeiten zugeordnet sind.

6. Verfahren nach Anspruch 5, wobei die eine oder die mehreren UE-Fähigkeiten i) eine Fähigkeit des wiederholten Übermittelns von Msg1, Msg3 und/oder MsgA und/oder ii) eine mit Strahlformung zusammenhängende Fähigkeit beinhalten.

7. Verfahren nach einem der Ansprüche 1-6, wobei das eine oder die mehreren Kriterien beinhalten, dass eine Messung eines Downlink-Referenzsignals unter einem vorbestimmten Schwellenwert liegt oder nicht größer als dieser ist.

8. Verfahren nach einem der Ansprüche 1-7, wobei der Wiederholungsparameter ferner die Anzahl von zulässigen oder erforderlichen wiederholten Übermittlungen der ersten Nachricht beinhaltet.

9. Verfahren nach einem der Ansprüche 1-8, wobei eine konkrete Gruppe von PRACH-Ressourcen zur wiederholten Übermittlung der ersten Nachricht für die UEs bestimmt ist.

10. Verfahren (1100) zum Konfigurieren einer Benutzerausrüstung, UE, um wiederholt eine erste Nachricht zu übermitteln, während eine Wiederholungsbedingung erfüllt ist, wobei das Verfahren durch eine UE durchgeführt wird und Folgendes umfasst:

Empfangen (s1102) einer zweiten Nachricht, die einen Wiederholungsparameter beinhaltet, wobei der Wiederholungsparameter angibt, dass eine UE, die die zweite Nachricht empfängt, die den Wiederholungsparameter beinhaltet, die erste Nachricht wiederholt empfangen darf oder muss, während die Wiederholungsbedingung erfüllt ist, wenn ein oder mehrere Kriterien erfüllt sind;
auf Grundlage der empfangenen zweiten Nachricht, Bestimmen (s1104), ob die erste Nachricht wiederholt zu übermitteln ist; und
Übermitteln (s1106) der ersten Nachricht, **dadurch gekennzeichnet, dass**
die Wiederholungsbedingung darin besteht, dass ein erneuter Versuch des Physical Random Access Channel, PRACH, nicht erfolgt ist, und
das eine oder die mehreren Kriterien beinhalten, dass die UE, die die zweite Nachricht empfängt, (i) eine UE ist, die dazu konfiguriert ist, einen missionskritischen, MC, Dienst bereitzustellen, (ii) eine UE ist, die dazu konfiguriert ist, einen oder mehrere Multimedia-Prioritätsdienste bereitzustellen, oder (iii) ein beliebiges von (i) und (ii) zutrifft.

11. Verfahren nach Anspruch 10, wobei die erste Nachricht eine Direktzugriffspräambel beinhaltet und wobei die Wiederholungsbedingung auch darin besteht, dass ein Fenster einer Direktzugriffsantwort, RAR, nicht beendet wurde.

12. Verfahren nach einem der Ansprüche 10-11, wobei

die zweite Nachricht eine Sendenachricht ist und
der Wiederholungsparameter in dem Systeminformationsblock, SIB, der Sendenachricht beinhaltet ist.

13. Verfahren nach einem der Ansprüche 10-12, wobei das eine oder die mehreren Kriterien einer oder mehreren UE-Fähigkeiten zugeordnet sind und wobei die eine oder die mehreren UE-Fähigkeiten i) eine Fähigkeit des wiederholten Übermittelns von Msg1, Msg3 und/oder MsgA und/oder ii) eine mit Strahlformung zusammenhängende Fähigkeit beinhalten.

14. Verfahren nach einem der Ansprüche 10-13, wobei

das Verfahren ferner Empfangen eines Downlink-Referenzsignals umfasst und
das eine oder die mehreren Kriterien beinhalten, dass eine Messung des Downlink-Referenzsignals unter einem vorbestimmten Schwellenwert liegt oder nicht größer als dieser ist.

15. Verfahren nach einem der Ansprüche 10-14, wobei der Wiederholungsparameter ferner die Anzahl an zulässigen oder erforderlichen wiederholten Übermittlungen der ersten Nachricht angibt.

16. Verfahren nach einem der Ansprüche 10-15, wobei eine konkrete Gruppe von PRACH-Ressourcen zur wiederholten Übermittlung der ersten Nachricht bestimmt ist.

17. Basisstation (1200) zum Konfigurieren einer oder mehrerer Benutzerausrüstungen, UEs, um wiederholt eine erste Nachricht zu übermitteln, während eine Wiederholungsbedingung erfüllt ist, umfassend ein Mittel, das zu Folgendem konfiguriert sind:

Einschließen (s1002) eines Wiederholungsparameters in eine zweite Nachricht, wobei der Wiederholungsparameter angibt, dass eine UE, die die zweite Nachricht empfängt, die den Wiederholungsparameter beinhaltet, die erste Nachricht wiederholt empfangen darf oder muss, während die Wiederholungsbedingung erfüllt ist, wenn ein oder mehrere Kriterien erfüllt sind; und
Übermitteln (s1004) der zweiten Nachricht, **dadurch gekennzeichnet, dass**
die Wiederholungsbedingung darin besteht, dass ein erneuter Versuch des Physical Random Access Channel, PRACH, nicht erfolgt ist, und
das eine oder die mehreren Kriterien beinhalten, dass die UE, die die zweite Nachricht empfängt, (i) eine UE ist, die dazu konfiguriert ist, einen missionskritischen, MC, Dienst bereitzustellen, (ii) eine UE ist, die dazu konfiguriert ist, einen oder mehrere Multimedia-Prioritätsdienste bereitzustellen, oder (iii) ein beliebiges von (i) und (ii) zutrifft.

18. Basisstation nach Anspruch 17, wobei die Basisstation ferner ein Mittel umfasst, das dazu konfiguriert ist, das Verfahren nach einem der Ansprüche 2-9 durchzuführen.

19. Benutzerausrüstung, UE, (1300) zum wiederholten Übermitteln einer ersten Nachricht, während eine Wiederholungsbedingung erfüllt ist, umfassend ein Mittel, das zu Folgendem konfiguriert ist:

Empfangen (s1102) einer zweiten Nachricht, die einen Wiederholungsparameter beinhaltet, wobei der Wiederholungsparameter angibt, dass eine UE, die die zweite Nachricht empfängt, die den Wiederholungsparameter beinhaltet, die erste Nachricht wiederholt empfangen darf oder muss, während die Wiederholungsbedingung erfüllt ist, wenn ein oder mehrere Kriterien erfüllt sind;
auf Grundlage der empfangenen zweiten Nachricht, Bestimmen (s1104), ob die erste Nachricht wiederholt zu übermitteln ist; und
Übermitteln (s1106) der ersten Nachricht, **dadurch gekennzeichnet, dass**
die Wiederholungsbedingung darin besteht, dass ein erneuter Versuch des Physical Random Access Channel, PRACH, nicht erfolgt ist, und
das eine oder die mehreren Kriterien beinhalten, dass die UE, die die zweite Nachricht empfängt, (i) eine UE ist, die dazu konfiguriert ist, einen missionskritischen, MC, Dienst bereitzustellen, (ii) eine UE ist, die dazu konfiguriert ist, einen oder mehrere Multimedia-Prioritätsdienste bereitzustellen, oder (iii) ein beliebiges von (i) und (ii) zutrifft.

20. UE nach Anspruch 19, wobei de UE ferner ein Mittel umfasst, das dazu konfiguriert ist, das Verfahren nach einem der Ansprüche 11-16 durchzuführen.

**Revendications**

1. Procédé (1000) de configuration d'un ou plusieurs équipements utilisateurs, UE, pour transmettre de manière répétée un premier message lorsqu'une condition de répétition est remplie, le procédé étant réalisé par une station de base et comprenant :

l'inclusion (s1002) dans un deuxième message d'un paramètre de répétition, dans lequel le paramètre de répétition indique qu'un UE recevant le deuxième message incluant le paramètre de répétition est autorisé à ou doit transmettre le premier message de manière répétée tant que la condition de répétition est remplie si un ou plusieurs critères sont remplis ; et
la transmission (s1004) du deuxième message, **caractérisée en ce que**
la condition de répétition est que la nouvelle tentative du canal d'accès aléatoire physique, PRACH, n'a pas eu lieu, et
lesdits un ou plusieurs critères incluent que l'UE recevant le deuxième message est (i) un UE configuré pour fournir un service critique pour la mission, MC, (ii) un UE configuré pour fournir un ou plusieurs services multimédias prioritaires, ou (iii) l'un quelconque de (i) et (ii).

2. Procédé selon la revendication 1, dans lequel le premier message comprend un préambule à accès aléatoire.

3. Procédé selon l'une quelconque des revendications 1 à 2, dans lequel la condition de répétition est également qu'une fenêtre de réponse d'accès aléatoire, RAR, n'a pas été terminée.

4. Procédé selon l'une quelconque des revendications 1 à 3, dans lequel

le deuxième message est un message de diffusion, et
le paramètre de répétition est inclus dans le bloc d'informations système, SIB, du message de diffusion.

5. Procédé selon l'une quelconque des revendications 1 à 4, dans lequel lesdits un ou plusieurs critères sont associés à une ou plusieurs capacités d'UE.

6. Procédé selon la revendication 5, dans lequel lesdites une ou plusieurs capacités d'UE comprennent i) une capacité de transmission répétée de Msg1, Msg3 et/ou MsgA, et/ou ii) une capacité liée à la formation de faisceau.

**7.** Procédé selon l'une quelconque des revendications 1 à 6, dans lequel lesdits un ou plusieurs critères incluent qu'une mesure d'un signal de référence de liaison descendante soit inférieure ou non supérieure à un seuil prédéterminé.

**8.** Procédé selon l'une quelconque des revendications 1 à 7, dans lequel le paramètre de répétition indique en outre le nombre de transmissions répétées autorisées ou requises du premier message.

**9.** Procédé selon l'une quelconque des revendications 1 à 8, dans lequel
un groupe particulier de ressources PRACH est dédié à la transmission répétée du premier message pour les UE.

**10.** Procédé (1100) de configuration d'un équipement utilisateur (UE) pour transmettre de manière répétée un premier message lorsqu'une condition de répétition est remplie, le procédé étant réalisé par un UE et comprend :

la réception (s1102) d'un deuxième message incluant un paramètre de répétition, le paramètre de répétition indiquant qu'un UE recevant le deuxième message incluant le paramètre de répétition est autorisé à ou doit transmettre le premier message de manière répétée pendant que la condition de répétition est remplie si un ou plusieurs critères sont remplis ;
sur la base du deuxième message reçu, la détermination (s1104) s'il faut transmettre de manière répétée le premier message ;
et
la transmission (s1106) du premier message, **caractérisée en ce que**
la condition de répétition est que la nouvelle tentative du canal d'accès aléatoire physique, PRACH, n'a pas eu lieu, et
lesdits un ou plusieurs critères incluent que l'UE recevant le deuxième message est (i) un UE configuré pour fournir un service critique pour la mission, MC, (ii) un UE configuré pour fournir un ou plusieurs services prioritaires multimédia, ou (iii) l'un quelconque de (i) et (ii).

**11.** Procédé selon la revendication 10, dans lequel le premier message comprend un préambule d'accès aléatoire et dans lequel la condition de répétition est également qu'une fenêtre de réponse d'accès aléatoire, RAR, n'a pas été terminée.

**12.** Procédé selon l'une quelconque des revendications 10 à 11, dans lequel

le deuxième message est un message de diffusion, et
le paramètre de répétition est inclus dans le bloc d'informations système, SIB, du message de diffusion.

**13.** Procédé selon l'une quelconque des revendications 10 à 12, dans lequel lesdits un ou plusieurs critères sont associés à une ou plusieurs capacités d'UE et dans lequel lesdites une ou plusieurs capacités d'UE comprennent i) une capacité de transmission répétée de Msg1, Msg3 et/ou MsgA, et/ou ii) une capacité liée à la formation de faisceau.

**14.** Procédé selon l'une quelconque des revendications 10 à 13, dans lequel

le procédé comprend en outre la réception d'un signal de référence de liaison descendante, et
lesdits un ou plusieurs critères incluent qu'une mesure du signal de référence de liaison descendante soit inférieure ou non supérieure à un seuil prédéterminé.

**15.** Procédé selon l'une quelconque des revendications 10 à 14, dans lequel le paramètre de répétition indique en outre le nombre de transmissions répétées autorisées ou requises du premier message.

**16.** Procédé selon l'une quelconque des revendications 10 à 15, dans lequel un groupe particulier de ressources PRACH est dédié à la transmission répétée du premier message.

**17.** Station de base (1200) permettant de configurer un ou plusieurs équipements utilisateurs, UE, pour transmettre de manière répétée un premier message lorsqu'une condition de répétition est remplie, comprenant un moyen configuré pour :

inclure (s1002) dans un deuxième message un paramètre de répétition, dans lequel le paramètre de répétition indique qu'un UE recevant le deuxième message incluant le paramètre de répétition est autorisé à ou doit transmettre le premier message de manière répétée tant que la condition de répétition est remplie si un ou plusieurs critères sont remplis ; et

transmettre (s1004) le deuxième message, **caractérisée en ce que**

la condition de répétition est que la nouvelle tentative du canal d'accès aléatoire physique, PRACH, n'a pas eu lieu, et

lesdits un ou plusieurs critères incluent que l'UE recevant le deuxième message est (i) un UE configuré pour fournir un service critique pour la mission, MC, (ii) un UE configuré pour fournir un ou plusieurs services multimédias prioritaires, ou (iii) l'un quelconque de (i) et (ii).

18. Station de base selon la revendication 17, dans laquelle la station de base comprend en outre un moyen configuré pour réaliser le procédé selon l'une quelconque des revendications 2 à 9.

19. Equipement utilisateur, UE, (1300) permettant de transmettre de manière répétée un premier message lorsqu'une condition de répétition est remplie, comprenant un moyen configuré pour :

recevoir (s1102) un deuxième message incluant un paramètre de répétition, le paramètre de répétition indiquant qu'un UE recevant le deuxième message incluant le paramètre de répétition est autorisé à ou doit transmettre le premier message de manière répétée pendant que la condition de répétition est remplie si un ou plusieurs critères sont remplis ;

sur la base du deuxième message reçu, déterminer (s1104) s'il faut transmettre de manière répétée le premier message ; et

transmettre (s1106) le premier message, **caractérisée en ce que** la condition de répétition est que la nouvelle tentative du canal d'accès aléatoire physique, PRACH, n'a pas eu lieu, et

lesdits un ou plusieurs critères incluent que l'UE recevant le deuxième message est (i) un UE configuré pour fournir un service critique pour la mission, MC, (ii) un UE configuré pour fournir un ou plusieurs services multimédias prioritaires, ou (iii) l'un quelconque de (i) et (ii).

20. UE selon la revendication 19, dans lequel l'UE comprend en outre un moyen configuré pour réaliser le procédé selon l'une quelconque des revendications 11 à 16.

FIG. 1

FIG. 2

☐ = 1 PRACH occasion

FDM of PRACH occasions
(1, 2, 4, or 8 occasions,
always contiguous)

Freq.

One PRACH configuration period
(10, 20, 40, 80, or 160 ms)
A row in the RACH configuration table specifies
the time-domain PRACH occasion pattern for one
PRACH configuration period.

The pattern then repeats ...

Time

Frequency of first
PRACH occasion

FIG. 3

FIG. 4

FIG. 5

FIG. 6

Example:
- #SSB-perPRACH-Occasion=2
- totalNumberOfRA-premables = 64
- #CB-prembles-per-SSB = 8

The 64 preambles configured for the cell (per PRACH occasion)

0    8                                    32    40                              63

Map to SSB0                                        SSB1

■ = Preamble indices for CBRA

☐ = Preamble indices for CFRA

FIG. 7

Example:
- #SSB-perPRACH-Occasion=2
- totalNumberOfRA-premables = 64
- #CB-prembles-per-SSB = 8
- numberofRA-PreamblesGroupA = 6

The 64 preambles configured for the cell (per PRACH occasion)

| 0 | 8 | | 32 | 40 | | 63 |

Map to SSB0                                SSB1

■ = Preamble indices for CBRA, group A

◨ = Preamble indices for CBRA, group B

□ = Preamble indices for CFRA

FIG. 8

Example:
- #SSBs-per-PRACH-occasion=4
- #CB-preambles-per-SSB = 4
- #msgA-CB-PreamblesPerSSB = 2

The 64 preambles configured for the cell (per PRACH occasion)

| 0 | 16 | 32 | 48 | 63 |

Map to SSB0          SSB1          SSB2          SSB3

■  = Preamble indices for CBRA 4-step RACH

▨  = Preamble indices for CFRA 4-step RACH

□  = Preamble indices for CBRA 2-step RACH

FIG. 9

1000

s1002

Including in a second message a repetition parameter

s1004

Transmitting the second message

FIG. 10

1100

s1102

| Receiving a second message including a repetition parameter |

s1104

| Based on the received second message, determining whether to repeatedly transmit the first message |

s1106

| Transmitting the first message |

FIG. 11

FIG. 12

1300

1308
Data storage system

1302
PC
1355
P

1342 1341
1343 CP 1344
CRI

1348
Communication Circuitry
Tx        Rx
1345      1347

1349

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021058971 A1

- WO 2019024130 A1